# EUROPÄISCHE PATENTANMELDUNG

(11) **EP 4 783 412 A1**
(43) Veröffentlichungstag der Anmeldung: **29.07.2026**
(21) Anmeldenummer: 25217095.6
(22) Anmeldetag: 19.11.2025
(51) Int. Cl.: H02J 7/34, H02H 7/16, H02H 7/22, H02H 9/02

(54) **VERFAHREN ZUM BETRIEB EINER VORLADESTEUERUNG**

(30) Priorität: 27.01.2025 DE 102025102799
(71) Anmelder: Ellenberger & Poensgen GmbH, 90518 Altdorf (DE)
(72) Erfinder: KÖPF, Hendrik-Christian, 90480 Nürnberg (DE); LABS, Alexander, 90610 Winkelhaid (DE); STEEGMÜLLER, Peter, 90449 Nürnberg (DE)
(74) Vertreter: FDST Patentanwälte

(57) **Zusammenfassung**

Die Erfindung betrifft ein Verfahren (62) zum Betrieb einer Vorladesteuerung (14), die zwei Anschlüsse (16) umfasst, die mittels eines ersten Strompfads (28) elektrisch verbunden sind, der eine Reihenschaltung (42) mit einem Widerstand (46) und einem Schalter (44) aufweist. Eine Aufforderung (66) zum Start einer Vorladung (68) wird erkannt, und zum Start der Vorladung (68) wird der Schalter (44) in den elektrisch leitenden Zustand versetzt. Die Vorladung (68) wird beendet, wenn eine an der Vorladesteuerung (14) anfallende elektrische Spannung kleiner als ein Grenzwert (78) ist. Die Erfindung betrifft ferner eine Vorladesteuerung (14) und einen Gleichspannungskreis (2).

## Beschreibung

Die Erfindung betrifft ein Verfahren zum Betrieb einer Vorladesteuerung. Die Vorladesteuerung weist zwei Anschlüsse auf, die mittels eines ersten Strompfads elektrisch verbunden sind, der eine Reihenschaltung mit einem Widerstand und einem Schalter aufweist. Ferner betrifft die Erfindung eine Vorladesteuerung sowie einen Gleichspannungskreis.

Für den Betrieb von elektrischen Verbrauchern, die auch als Last bezeichnet werden, wird üblicherweise eine Spannungsquelle herangezogen. Mittels dieser wird beispielsweise eine elektrische Gleichspannung bereitgestellt, und bei Betrieb der Last wird zu dieser von der Spannungsquelle über eine elektrische Leitung ein elektrischer Strom geführt. Falls die Last einen oder mehrere Kondensatoren aufweist, werden diese nach eine der erstmaligen elektrischen Kontaktierung mit der Spannungsquelle, oder zumindest sobald ein elektrischer Stromfluss möglich ist, geladen. Wenn der Kondensator nicht geladen ist, wird mittels dessen kein elektrischer Widerstand bereitgestellt, weswegen der mittels der Leitung geführte elektrische Strom vergleichsweise groß ist und zu einer Beschädigung/Überlastung führen kann, zumindest wenn die anliegende elektrische Spannung und/oder die Kapazität des Kondensators vergleichsweise groß ist.

Zur Verhinderung hiervon sind Vorladesteuerungen bekannt. Diese sind in die elektrische Leitung eingebracht, die von einem der Pole der Gleichspannungsquelle zu der Last geführt ist, sodass der zum Laden des Kondensators verwendete elektrische Strom über die Vorladesteuerung geführt wird. Die Vorladesteuerung umfasste üblicherweise einen Widerstand, der mittels eines Schalters überbrückt ist. Wenn die Vorladung erfolgen soll, wird der Schalter geöffnet, sodass der elektrische Strom über den Widerstand geführt wird, was den mittels der Vorladesteuerung geführten elektrischen Strom begrenzt. Der elektrische Schalter bleibt so lange geöffnet, bis die über der Kapazität anfallende elektrische Spannung größer als ein bestimmter Wert ist. Im Anschluss hieran wird der Schalter geschlossen, sodass nunmehr der elektrische Strom nicht mehr über den Widerstand fließt, und der Kondensator direkt geladen wird. Aufgrund der bereits erfolgten Vorladung des Kondensators und der deswegen daran anliegenden elektrische Spannung treten dann keine übermäßigen elektrischen Ströme mehr auf.

Zur Bestimmung, ab wann das Schalter geöffnet wird, ist es dabei erforderlich, die über den Kondensator anfallende elektrische Spannung zu ermitteln. Hierfür ist es erforderlich, die Last signaltechnisch mit der Vorladesteuerung zu verbinden, weswegen eine Montage kompliziert ist. Auch ist bei dem Austausch der Last es erforderlich, auch die signaltechnische Verbindung mit der Vorladesteuerung anzupassen. Ferner ist beispielsweise bei der Änderung der Konfiguration der Last eine entsprechende Anpassung der Vorladesteuerung erforderlich. Alternativ hierzu ist die Vorladesteuerung direkt mit dem anderen Pol der elektrischen Gleichspannung zum Messen der über der Last anfallenden elektrischen Spannung kontaktiert. Auch dies führt zu einer verkomplizierten Montage, und es ist erforderlich, entsprechende Leitungen vorzuhalten. Zudem liegt somit in der Vorladesteuerung die vollständige mittels der Gleichspannungsquelle bereitgestellte elektrische Spannung an, weswegen die verwenden Bauteil hierauf angepasst werden müssen. Somit sind Anforderungen an diese erhöht und daher auch Herstellungskosten.

Der Erfindung liegt die Aufgabe zugrunde, ein besonders geeignetes Verfahren zum Betrieb einer Vorladesteuerung, eine besonders geeignete Vorladesteuerung sowie einen besonders geeigneten Gleichspannungskreis anzugeben, wobei vorteilhafterweise Herstellungskosten reduziert sind, und wobei zweckmäßigerweise eine Montage vereinfacht ist.

Hinsichtlich des Verfahrens wird diese Aufgabe durch die Merkmale des Anspruchs 1, hinsichtlich der Vorladesteuerung durch die Merkmale des Anspruchs 5 und hinsichtlich des Gleichspannungskreises durch die Merkmale des Anspruchs 9 erfindungsgemäß gelöst. Vorteilhafte Weiterbildungen und Ausgestaltungen sind Gegenstand der jeweiligen Unteransprüche.

Das Verfahren dient dem Betrieb einer Vorladesteuerung. Die Vorladesteuerung dient insbesondere dem Vorladen einer zu ladenden Komponente, die insbesondere eine (elektrische) Kapazität aufweist. Die Kapazität ist dabei beispielsweise mittels eines Kondensators oder einer Batterie bereitgestellt, die jeweils eine vergleichsweise große Kapazität aufweisen. Zum Vorladen wird eine (begrenzte) Menge elektrische Energie von einer Energiequelle, wie einer Spannungsquelle, über die Vorladesteuerung zu der zu ladenden Komponente geleitet. Beispielsweise reicht dabei die elektrische Energie nicht aus, um die zu ladende Komponente bestimmungsgemäß zu betreiben. Vielmehr erfolgt lediglich ein Laden der Kapazität der zu ladenden Komponente bis zu einem bestimmten Wert. Anschließend ist das Vorladen beendet, und die zu ladende Komponente wird nunmehr anderweitig betrieben, wofür insbesondere die Vorladesteuerung nicht mehr verwendet oder zumindest nicht zum Durchführen der Vorladung betrieben wird. Zusammenfassend dient die Vorladesteuerung dem Vorladen, wofür die Vorladung durchgeführt wird.

Im bestimmungsgemäßen Montagezustand, für den die Vorladesteuerung geeignet, insbesondere vorgesehen und eingerichtet ist, ist die Vorladesteuerung zwischen die Spannungsquelle und die zu ladende Komponente geschaltet. Hierfür ist insbesondere an die Vorladesteuerung eine zu der Spannungsquelle führende Leitung und eine zu der zu ladenden Komponente führende Leitung (elektrisch) angeschlossen. Die Spannungsquelle ist bevorzugt eine Gleichspannungsquelle. Somit wird insbesondere die Vorladesteuerung in einem Gleichspannungskreis eingesetzt, wobei insbesondere ein Stromkreis gebildet ist. Vorzugsweise liegt an der Spannungsquelle eine elektrische Gleichspannung zwischen 400 V und 650 V an, also insbesondere höherer Gleichspannung. Vorzugsweise wird die Vorladesteuerung zum Vorladen eines Aktors bei einer Industrieanlage verwendet. Der Aktor bildet hierbei insbesondere die zu ladende Komponente. Zweckmäßigerweise wird die Vorladesteuerung im Bereich der Industrieautomation verwendet. Insbesondere ist die mittels der Spannungsquelle bereitgestellte elektrische Spannung, für die daher die Vorladesteuerung zweckmäßigerweise auch geeignet/vorgesehen/eingerichtet ist, 24 V, 48 V, 380 V, 650 V, 760 V. Bei einer Alternative wird die Vorladesteuerung zum Vorladen einer Straßenbeleuchtung, eines Schiffsbordnetzes, Bahnanwendungen-Infrastruktur, Bahnanwendungen-Antrieb oder im Bereich der elektrifizierten Luftfahrt verwendet. Bei einer weiteren Alternative wird die Vorladesteuerung im Ausbau und Integration erneuerbarer Energieerzeuger, bei Inselnetzen, im privaten häuslichen Bereich, in Gewächshäusern, bei der Elektrifizierung straßengebundener Mobilität (Elektromobilität), Landwirtschaft oder bei Baustellenfahrzeugen verwendet. Die verwendet elektrische (Gleich- ) Spannung ist dabei zum Beispiel zwischen 1500 V und 3000 V oder beträgt 110 V, 380 V, 400 V 800 V, 1000 V 1500 V, 3000 V. Zusammenfassend wird alternativ zur Anwendung bei einer Industrieanlage die Vorladesteuerung beispielsweise bei einem Elektrofahrzeug verwendet, wie einem Kraftfahrzeug, einem Flugzeug oder einem Schiff/Boot.

Die Vorladesteuerung umfasst zwei Anschlüsse, an die im Montagezustand weitere Bestandteile des Stromkreises, zweckmäßigerweise die etwaigen Leitungen, angeschlossen sind. Hierfür sind die Anschlüsse geeignet, insbesondere vorgesehen und eingerichtet. Vorzugsweise ist hierfür an dem jeweiligen Anschluss ein Kabel oder eine Stromschiene angeschlossen, wobei ein Querschnitt dieser zum Beispiel zwischen 10 mm2 und 100 mm2 oder zwischen 25 mm2 und 92 mm2 ist. Der Querschnitt beträgt beispielsweise 16 mm2, 25 mm2 oder 35 mm2. Der Querschnitt ist beispielsweise 6 mm2, zwischen 6mm2 und 16 mm2 oder zwischen 16 mm2 und 50 mm2. Insbesondere sind die Anschlüsse nach Art von Käfigklemmen ausgebildet oder umfassen zumindest diese.

Die beiden Anschlüsse sind mittels eines ersten Strompfads miteinander elektrisch verbunden. Beispielsweise sind hierbei die beiden Anschlüsse mittels des ersten Strompfads direkt miteinander elektrisch kontaktiert, oder mit dem ersten Strompfads ist noch ein weiteres Bauteil elektrisch in Reihe geschaltet, über das und den ersten Strompfad dann die beiden Anschlüsse elektrisch miteinander verbunden sind. Der erste Strompfad ist geeigneterweise in einem Gehäuse angeordnet, das vorzugsweise aus einem Kunststoff gefertigt ist. Somit ist ein Berührschutz bereitgestellt, und dieser ist auch vor Umgebungseinflüssen geschützt. Zweckmäßigerweise sind die etwaigen Anschlüsse in das Gehäuse eingebracht, sodass eine elektrische Kontaktierung des ersten Strompfads von außerhalb des Gehäuses ermöglicht ist. Zweckmäßigerweise bildet das Gehäuse eine äußere Begrenzung der Vorladesteuerung, und sämtliche weitere Bestandteile sind innerhalb des Gehäuses angeordnet und daher geschützt.

Der erste Strompfad weist eine Reihenschaltung mit einem Widerstand und einem Schalter auf. Beispielsweise ist die Reihenschaltung mittels dieser gebildet oder weist noch weitere Bestandteile auf. Der Widerstand ist insbesondere ein ohmscher Widerstand und/oder geeigneterweise derart ausgebildet, dass mittels dessen ein vergleichsweise großer elektrischer Strom geführt werden kann und/oder an diesen eine vergleichsweise große elektrische Spannung angelegt werden kann. Insbesondere ist es möglich, mittels des Widerstands einen elektrischen Strom größer als 0,5 A oder 1 A zu führen. Beispielsweise ist der mittels des Widerstands bereitgestellte Widerstandswert größer als 100 Ohm 1 kOhm oder 2 kOhm.

Bei dem Verfahren wird eine Aufforderung zum Start der Vorladung erkannt. Die Aufforderung besagt insbesondere, dass nunmehr ein Stromführen mittels der Vorladesteuerung erfolgen soll, also dass mittels der Vorladesteuerung ein elektrischer Strom geleitet werden soll, sodass über die Vorladesteuerung eine elektrische Energie geleitet wird. Dabei soll jedoch die mittels der Vorladesteuerung geführte elektrische Energie und/oder der darüber geführte elektrische Strom begrenzt sein, sodass das Vorladen erfolgen kann. Die Aufforderung wird beispielsweise erfasst, und die Vorladesteuerung weist hierfür zum Beispiel eine entsprechende Schnittstelle auf, über die die Aufforderung bereitgestellt wird. Dabei wird die Aufforderung zum Beispiel von einem Nutzer oder einer übergeordneten Steuerung erstellt. Insbesondere erfüllt die Schnittstelle einen Standard, wie zum Beispiel einen Busstandard. Zum Beispiel ist die Schnittstelle für den Anschluss eines Datenkabels geeignet, oder diese ist eine Funkschnittstelle. In einer weiteren Alternative umfasst beispielsweise die Vorladesteuerung ein Eingabegerät, wie zum Beispiel einen Schalter oder Hebel, mittels dessen die Aufforderung erstellt werden kann.

Nachfolgend wird die Vorladung gestartet. Zum Start der Vorladung wird der Schalter in den elektrisch leitenden Zustand versetzt. Zweckmäßigerweise ist dabei vor dem Erkennen der Aufforderung der Schalter in dem elektrisch nichtleitenden Zustand. Wenn der Schalter sich in dem elektrisch leitenden Zustand befindet ist es geeigneterweise möglich, den elektrischen Strom zwischen den beiden Anschlüssen über den ersten Strompfad und daher auch über den Widerstand zu führen. Aufgrund des Widerstands wird dabei der elektrische Strom begrenzt.

Die Vorladung wird beendet, wenn eine an der Vorladesteuerung anfallende elektrische Spannung kleiner als ein Grenzwert ist. Der Grenzwert ist beispielsweise von einem Hersteller vorgegeben. Besonders bevorzugt ist der Grenzwert an den Stromkreis angepasst, in dem die Vorladesteuerung verwendet wird. Beispielsweise ist es möglich, den Grenzwert zu verändern, geeigneterweise über die etwaige Schnittstelle und/ das oder ein weiteres Eingabegerät. Die elektrische Spannung wird dabei an der Vorladesteuerung erfasst, vorzugsweise mittels Messens, wofür insbesondere die Differenz zwischen zwei elektrischen Potenzialen ermittelt wird. Dabei weisen zwei unterschiedliche Bestandteile der Vorladesteuerung jeweils eines der elektrischen Potentiale auf.

Aufgrund des Verfahrens ist somit zum Bestimmen, wann die Vorladung beendet wird, keine Überwachung des Stromkreises und/oder der zu ladenden Komponente erforderlich. Mit anderen Worten ist zum Ermitteln der anfallenden elektrischen Spannung keine signaltechnische Verbindung mit weiteren Bestandteilen erforderlich. Somit ist eine Montage und auch Wartung vereinfacht. Zudem ist es nicht erforderlich, hierfür entsprechende Anschlüsse bei der Vorladesteuerung vorzusehen, weswegen Herstellungskosten reduziert sind. Auch ist es nicht erforderlich, ein bestimmtes elektrisches Potential, das anderweitig nicht bei der Vorladesteuerung vorhanden ist, zu dieser zu führen, um zu bestimmen, wann die Vorladung beendet wird. Zudem ist es nicht erforderlich, die Bestandteile der Vorladesteuerung für elektrische Spannungen auszulegen, die anderweitig nicht geführt wird. Somit bestehen an die Bestandteile ist der Vorladesteuerung keine zusätzlichen Anforderungen, weswegen Herstellungskosten reduziert sind. Zusammenfassend erfolgt das Beenden der Vorladung, anhand von Zustandsdaten der Vorladesteuerung, nämlich der an der Vorladesteuerung anfallenden elektrischen Spannung. Beispielsweise wird die anfallende elektrische Spannung für den Betrieb der Vorladesteuerung und/oder zur Überwachung der Vorladesteuerung verwendet. Somit sind keine zusätzlichen Bauteile erforderlich, weswegen Herstellungskosten reduziert sind.

Die Vorladesteuerung weist zweckmäßigerweise eine Steuereinheit auf, mittels derer das Verfahren zumindest teilweise durchgeführt wird. Beispielsweise ist die Steuereinheit aus diskreten elektrischen/elektronischen Bauteilen aufgebaut, als anwendungsspezifischer integrierter Schaltkreis (ASIC) ausgebildet und/oder weist einen Mikroprozessor auf, der programmierbar ausgestaltet ist. Dabei ist die Steuereinheit geeignet, insbesondere vorgesehen und eingerichtet, das Verfahren durchzuführen.

Die Vorladesteuerung weist vorzugsweise einen zweiten Strompfad auf, mittels dessen die beiden Anschlüsse elektrisch verbunden sind. Der zweite Strompfad weist vorzugsweise einen mechanischen Schalter auf. Somit ist der mechanische Schalter elektrisch zwischen die beiden Anschlüsse des Schaltgeräts geschaltet. Somit ist es möglich, mittels des mechanischen Schalters einen elektrischen Stromfluss über den zweiten Strompfad zu schalten. Beispielsweise weist der zweite Strompfad noch weitere Bauteile auf, oder zum Beispiel ist der erste zweite lediglich mittels des mechanischen Schalters sowie etwaige elektrischer Leitungen, wie Stromschienen, die zu dem elektrischen mechanischen Schalter führen, gebildet. Somit sind Herstellungskosten reduziert. Insbesondere sind der erste und der zweite Strompfad zueinander elektrisch parallel geschaltet. Sofern der erste Strompfad direkt mit den beiden Anschlüssen elektrisch kontaktiert ist, ist daher auch der zweite Strompfad direkt mit den Anschlüssen elektrisch kontaktiert. Falls dahingegen der erste Strompfad über ein weiteres Bauteil mit einem der Anschlüsse elektrisch kontaktiert ist, ist auch der zweite Strompfad elektrisch in Reihe mit diesem Bauteil geschaltet.

Sobald sind Vorladung beendet wurde, wird insbesondere der mechanische Schalter in den elektrisch leitfähigen Zustand versetzt, sodass über den zweiten Strompfad der elektrische Strom von der Spannungsquelle zu der zu ladenden Komponente geführt wird. Aufgrund der Ausgestaltung als mechanischer Schalter ist dabei ein elektrischer Widerstand vergleichsweise gering, weswegen elektrische Verluste verringert sind. Da die zu ladende Komponente bereits ausreichend geladen wurde, ist die mittels des mechanischen Schalters geschaltete elektrische Spannung verringert, weswegen ein Ausbilden eines Lichtbogens dort verringert ist.

Beispielsweise wird die elektrische Spannung über dem Widerstand, dem Schalter gemessen oder der vollständigen Reihenschaltung gemessen. Besonders bevorzugt jedoch wird die elektrische Spannung über der Vorladesteuerung gemessen. Mit anderen Worten wird somit insbesondere das elektrische Potenztal eines der Anschlüsse und das elektrische Potential des anderen Anschlusses bestimmt, und die Differenz hieraus als elektrische Spannung herangezogen. Insbesondere ist im Montagezustand einer der Anschlüsse elektrisch direkt mit der Spannungsquelle und der andere mit der zu ladenden Komponente elektrisch verbunden. Folglich werden beispielsweise etwaige weitere Bauteile berücksichtigt, über die der elektrische Strom zumindest teilweise geführt wird. Auch ist anhand der elektrischen Spannung somit zum Beispiel ein Kurzschluss innerhalb der Vorladesteuerung oder ein Abreißen einer elektrischen Leitung ermittelbar, weswegen anhand der elektrischen Spannung auch der Zustand der Vorladesteuerung vergleichsweise genau bestimmt werden kann.

Beispielsweise wird nach dem Start der Vorladung der Schalter bis zum Beenden der Vorladung in dem elektrisch leitenden Zustand belassen. Somit ist die Dauer der Vorladung verkürzt. Besonders bevorzugt jedoch wird der Schalter lediglich für eine vorbestimmte erste Zeitspanne in dem elektrisch leitenden Zustand belassen. Danach wird der Schalter erneut in den elektrisch nichtleitenden Zustand versetzt und in diesem für eine zweite. Zeitspanne belassen. Insbesondere wird hierfür ein oder mehrere Zeitglied(er) verwendet. Zweckmäßigerweise wird erst nach Ablauf der zweiten Zeitspanne überprüft, ob die anfallende elektrische Spannung kleiner als der Grenzwert ist. Falls dies der Fall ist, wird das Verfahren oder zumindest die Vorladung beendet. Falls dahingegen die anliegende elektrische Spannung größer als der Grenzwert ist, wird geeigneterweise der Schalter erneut für die erste Zeitspanne in den elektrisch leitenden Zustand versetzt. Anschließend wird erneut der Schalter erneut in den elektrisch nicht kleinen Zustand versetzt und für die zweite Zeitspanne abgewartet und dann überprüft, ob die anfallende elektrische Spannung kleiner als der Grenzwert ist. Dies erfolgt insbesondere solange, bis die Vorladung beendet ist.

Beispielsweise wird direkt nach dem Erkennen der Aufforderung der Schalter in den elektrisch leitenden Zustand versetzt, oder zweckmäßigerweise wird auch hier zunächst für die zweite Zeitspanne abgewartet und dann überprüft, ob die anfallende elektrische Spannung größer als der Grenzwert ist, bevor der Schalter in den elektrisch leitenden Zustand versetzt wird.

Beispielsweise sind die beiden Zeitspannen beliebig gewählt und können zum Beispiel von einem Nutzer angepasst werden. Besonders bevorzugt jedoch ist die zweite Zeitspanne stets größer als die erste Zeitspanne. Somit ist die Zeitspanne, während derer mittels des ersten Strompfads der elektrische Strom geführt wird, stets kleiner als die Zeitspanne, während derer kein elektrischer Strom geführt wird. Somit ist insbesondere ein Abbauen von Verlustwärme oder dergleichen ermöglicht, und es erfolgt auch keine Überlastung des Stromkreises, in dem die Vorladesteuerung eingesetzt wird.

Beispielsweise wird die Vorladesteuerung lediglich für die Vorladung der zu ladenden Komponente verwendet. Besonders bevorzugt jedoch erfolgt mittels der Vorladesteuerung auch eine Überprüfung auf einen Fehlerfall. Sobald dabei der Fehlerfall erkannt wurde, wird geeigneterweise der Schalter in den elektrisch nichtleitenden Zustand versetzt und beispielsweise dort gesperrt oder zumindest dort belassen. Somit ist eine Zerstörung oder weitere Beschädigung vermieden.

Der Fehlerfall ist beispielsweise ein Kurzschluss ein Überstrom oder Kurzschlussstrom. Hierfür wird insbesondere der mittels der Vorladesteuerung geführt elektrische Strom gemessen und mit einem weiteren Grenzwert verglichen, wofür geeigneterweise ein Kennfeld verwendet wird. In diesem sind insbesondere die weiteren Grenzwerte in Abhängigkeit eines jeweiligen Zeitfenster hinterlegt, für die elektrische Strom mit dem jeweiligen weiteren Grenzwert auftreten kann, bis der Fehlerfall erkannt ist. Somit wirkt die Vorladesteuerung nach Art eines Schutzschalters. Insbesondere weist die Vorladesteuerung zum Erkennen des Fehlerfalls einen entsprechend ausbildenden Sensor auf, wie einen Stromsensor. Besonders bevorzugt wird hierbei der Widerstand nach Art eines Messwiderstandes verwendet, und die über den Widerstand anfallende elektrische Spannung wir zum Ermitteln des geführten elektrischen Stroms verwendet. Alternativ oder in Kombination hierzu ist der Fehlerfall, wenn die anfallende elektrische Spannung größer als ein anderer Grenzwert ist, also wenn eine übermäßige elektrische Spannung an der Vorladesteuerung anfällt.

Besonders bevorzugt wird der Fehlerfall erkannt, wenn für einen nach einer dritten Zeitspanne nach dem Start der Vorladung die Vorladung noch nicht beendet wurde, also wenn nach Ablauf der dritten Zeitspanne die anfallende elektrische Spannung nicht kleiner als der Grenzwert ist. Beispielsweise wird dabei die anfallende elektrische Spannung erfasst, wenn der Schalter sich im elektrisch leitfähigen Zustand befindet, der Schalter in den elektrisch nichtleitenden Zustand versetzt wurde oder zweckmäßigerweise, wenn nach dem Versetzen des Schalters in den elektrischen nichtleitenden Zustand die etwaige Zeitspanne verstrichen ist. Die dritte Zeitspanne ist insbesondere derart bemessen, dass nach Ablauf dieser die zu ladende Komponente ausreichend geladen ist. Falls dies dann nach Ablauf der dritten Zeitspanne noch nicht der Fall ist, liegt ein nicht normales Verhalten vor, weswegen der Fehlerfall erkannt wird.

Die Vorladesteuerung weist zwei Anschlüsse auf, die mittels eines ersten Strompfads elektrisch verbunden sind. Der erste Strompfad umfasst eine Reihenschaltung mit einem Widerstand und einem Schalter. Somit sind der Widerstand und der Schalter zwischen die Anschlüsse elektrisch in Reihe geschaltet.

Beispielsweise befindet sich dabei zwischen dem Widerstand und dem Schalter noch ein weiteres Bauteil, oder zweckmäßigerweise ist der Widerstand direkt mit dem Schalter elektrisch kontaktiert.

Die Vorladesteuerung ist gemäß einem Verfahren betrieben, bei dem eine Aufforderung zum Start einer Vorladung erkannt wird, und zum Start der Vorladung der Schalter in den elektrisch leitenden Zustand versetzt wird. Die Vorladung wird beendet, wenn eine an der Vorladesteuerung anfallende elektrische Spannung kleiner als ein Grenzwert ist. Insbesondere weist die Vorladesteuerung eine Steuereinheit auf, mittels derer das Verfahren zumindest teilweise durchgeführt wird. Mittels der Steuereinheit wird geeigneterweise der Schalter entsprechend betrieben und/oder die Vorladung erkannt. Die Steuereinheit umfasst beispielsweise einen anwendungsspezifischen integrierter Schaltkreis (ASIC) und/oder einen Mikroprozessor, der zweckmäßigerweise programmierbar ausgestaltet ist. Bei einer weiteren Alternative ist die Steuereinheit beispielsweise lediglich mittels diskreter Bauteile erstellt. Zweckmäßigerweise weist die Vorladesteuerung einen Spannungssensor auf, mittels dessen die anfallende elektrische Spannung gemessen werden kann.

Insbesondere ist der Spannungssensor mit der Steuereinheit signaltechnisch verbunden, und als Spannungssensor wird beispielsweise ein Operationsverstärker verwendet, der elektrisch geeigneterweise mit den beiden Anschlüssen verbunden ist, sodass die an der Vorladesteuerung anfallende elektrische Spannung gemessen werden kann.

Vorzugsweise umfasst die Vorladesteuerung den zweiten Strompfad mit dem etwaigen mechanischen Schalter. Somit ist es möglich, nach Abschluss der Vorladung den elektrischen Strom zwischen den beiden Anschlüssen nicht mehr über den Widerstand zu führen, was elektrische Verluste reduziert. Geeigneterweise weist die Steuereinheit ein oder mehrere Zeitglieder auf, die insbesondere in Abhängigkeit der etwaigen ersten, zweiten und/oder dritten Zeitspanne gewählt und/oder angepasst sind. Somit ist die Ansteuerung vereinfacht.

Beispielsweise ist der zweite Strompfad lediglich mittels der Reihenschaltung gebildet. Besonders bevorzugt jedoch ist elektrisch parallel zu dem Schalter oder dem Widerstand ein Varistor geschaltet. Mittels dessen wird insbesondere eine elektrische Überspannung vermieden, die zum Beispiel zu einer Beschädigung des Widerstands bzw. des Schalters führen könnte. Zweckmäßigerweise sind sowohl der Widerstand als auch der Schalter mittels eines entsprechenden Varistors überbrückt, die geeigneterweise nach Art eines Spannungsteilers wirken. Somit liegt an dem Widerstand und dem Schalter stets höchstens eine vorher bekannte elektrische Spannung an, weswegen die verwenden Bauteil hierauf angepasst werden können. Somit ist eine Überlastung dieser vermieden, wobei Anforderungen an die Bauteile verringert, sind weswegen vergleichsweise kostengünstige Bauteile verwendet werden können.

Beispielsweise ist es möglich, mittels des Schalters den elektrischen Strom bidirektional zu schalten. Alternativ hierzu ist der Schalter lediglich zum Schalten des Stromflusses in eine einzige (Strom-)Richtung geeignet. Somit sind Anforderung an den Schalter verringert und daher Herstellungskosten reduziert. In diesem Fall ist beispielsweise die Vorladesteuerung lediglich zum Einsatz in einem Gleichspannungskreis vorgesehen. Bei Montage in dem Stromkreis ist es dabei erforderlich, die Vorladesteuerung derart anzuordnen, dass auch tatsächlich der mittels der Vorladesteuerung geführte elektrische Strom geschaltet werden kann, sodass die Vorladung erfolgen kann.

Besonders bevorzugt jedoch weist der erste Strompfad einen Brückengleichrichter auf, der eine Wechselspannungsseite und eine Gleichspannungsseite aufweist. Hierbei umfasste der Brückengleichrichter zwei Brückenzweige, die elektrisch parallel zwischen zwei Wechselspannungsseitenanschlüsse geschaltet sind, die die Wechselspannungsseite bilden. Jeder Brückenzweig weist mittig einen von zwei Gleichspannungsseitenanschlüsse auf, mittels derer die Gleichspannungsseite des Brückengleichrichters gebildet ist. Der Brückengleichrichter ist zweckmäßigerweise passiv ausgestaltet und somit als Diodengleichrichter ausgebildet. Zweckmäßigerweise weist jeder der beiden Brückenzweige jeweils zwei elektrisch in Reihe geschaltete Dioden auf, wobei deren Sperrrichtungen antiparallel zueinander sind, und wobei die beiden Brückenzweige unterschiedlich zueinander sind. Ein derartiger Brückengleichrichter wird auch als Zweipuls-Brücken-Gleichrichterschaltung bezeichnet.

Die Gleichspannungsseite ist mittels der der Reihenschaltung elektrische verbunden, sodass diese mittels der Reihenschaltung zum Beispiel kurzgeschlossen ist oder zumindest werden kann. Die Reihenschaltung ist somit mit den Gleichspannungsseitenanschlüssen elektrisch verbunden. Beispielsweise ist zwischen die Reihenschaltung und zumindest einen der Gleichspannungsseitenanschlüsse ein weiteres Bauteil geschaltet. Besonders bevorzugt jedoch ist die Schaltereinheit elektrisch direkt mit Gleichspannungsseitenanschlüssen kontaktiert. Somit sind Herstellungskosten reduziert. Aufgrund des Brückengleichrichters ist es somit möglich, mittels der Vorladesteuerung einen elektrischen Strom in beide Stromrichtungen zu führen, der jedoch stets mittels des Schalters der Reihenschaltung geschaltet werden kann, auch wenn dieser nicht bidirektional ausgestaltet ist. Somit sind Herstellungskosten reduziert.

Zweckmäßigerweise ist der Schalter mittels eines weiteren Widerstands überbrückt. Beispielsweise ist dabei der weitere Widerstand baugleich zu dem Widerstand oder weist zu diesem zum Beispiel einen unterschiedlichen Widerstandswert auf. Mittels des weiteren Widerstands und des Widerstands ist insbesondere ein Spannungsteiler realisiert, weswegen die an dem Schalter anliegende elektrische Spannung begrenzt und reduziert ist. Insbesondere ist hierbei zudem der Varistor oder die Varistoren vorhanden.

Alternativ oder besonders bevorzugt in Kombination zu dem weiteren Widerstand ist insbesondere der Widerstand mittels eines weiteren Schalters überbrückt. Der weitere Schalter bildet somit zweckmäßigerweise einen Bestandteil der Reihenschaltung. Zusammenfassend ist zweckmäßigerweise der Schalter mittels des weiteren Widerstands und der Widerstand mittels des weiteren Schalters überbrückt. Beispielsweisen weisen die beiden Schalter unterschiedliche Schalterrichtungen auf. Besonders bevorzugt jedoch ist es mittels der beiden Schalter lediglich möglich, den elektrischen Stromfluss in eine einzige gemeinsame Richtung zu schalten. Aufgrund der beiden Schalter ist die mittels jedes der Schalter zu schaltende elektrische Spannung reduziert. Folglich sind die Anforderungen an die beiden Schalter verringert, weswegen Herstellungskosten reduziert sind.

Zusammenfassend ist insbesondere die Stromrichtung, die mittels jedes der Schalter geschaltet werden kann gleich und in Abhängigkeit des Brückengleichrichter gewählt. Somit ist es insbesondere lediglich möglich, mittels der Schalter den elektrischen Strom lediglich in eine Richtung zu unterbrechen, obwohl mehrere Schalter vorhanden sind. Beispielsweise umfasst die Reihenschaltung genau zwei oder drei entsprechende Schalter. Geeigneterweise ist die Anzahl der Schalter geringer als 10, weswegen ein Aufwand verringert ist. Insbesondere ist somit mittels der Schalter eine Art Kaskode gebildet, und/oder diese sind nach Art einer Kaskode miteinander verschaltet.

Beispielsweise ist der Schalter und/oder der/die etwaigen weiteren Schalter, sofern diese vorhanden ist, als mechanische Schalter ausgebildet. Besonders bevorzugt jedoch ist der Schalter und/oder der/die weiteren Schalter, sofern vorhanden ist, als Halbleiterschalter ausgestaltet. Diese sind zweckmäßigerweise zueinander baugleich, weswegen Gleichteile verwendet werden können. Beispielsweise wird als Halbleiterschalter ein Feldeffekttransistor, wie als MOSFET, oder ein IGBT oder ein GTO herangezogen.

Beispielsweise ist der Schalter nicht, lediglich mittels des etwaigen Varistors und/oder des etwaigen weiteren Widerstands überbrückt. Alternativ oder besonders bevorzugt in Kombination hierzu ist der Schalter mittels einer Kapazität überbrückt, also insbesondere mittels eines Kondensators. Dieser wirkt einerseits in Verbindung mit dem Widerstand nach Art eines Spannungsteilers, weswegen die an dem Schalter anliegende elektrische Spannung ebenfalls begrenzt oder zumindest reduziert ist. Andererseits ist aufgrund der Kapazitäten sichergestellt, dass der der Spannungsquelle abgewandte Anschluss stets ein definiertes elektrisches Potential aufweist, also auch wenn der Schalter sich im elektrisch nichtleitenden Zustand befindet. Somit liegt auch an der zu ladenden Komponente stets ein bestimmtes elektrisches Potential an, weswegen ein unvorhersehbares Verhalten der zu ladenden Komponente vermieden ist. Somit ist eine Sicherheit erhöht. Ferner ist die mittels des Schutzschalters geschaltete elektrische Spannung begrenzt, wenn dieser von dem elektrisch nichtleitenden in den elektrisch leitenden Zustand versetzt wird, weswegen eine Beschädigung vermieden ist. Auch werden auf diese Weise Spannungsspitzen in dem Stromkreis vermieden, was eine Belastung der einzelnen Komponenten des Stromkreises verringert.

Der Gleichspannungskreis ist insbesondere ein Stromkreis und weist eine Gleichspannungsquelle mit zwei Polen auf. Mittels der Gleichspannungsquelle wird eine elektrische Gleichspannung bereitgestellt, die zwischen den beiden Polen anliegt und zweckmäßigerweise zwischen 100 V und 1000 V beträgt. Insbesondere ist die bereitgestellte elektrische Spannung zwischen 200 V und 800 V. Zum Beispiel ist die Gleichspannungsquelle eine Batterie oder ein Gleichrichter, der beispielsweise an ein Versorgungsnetz angeschlossen ist.

Ferner weist der Gleichspannungskreis eine zu ladende Komponente mit zwei Ladeanschlüssen auf. Die zu ladende Komponente ist beispielsweise ein Kondensator, wie ein Elektrolytkondensator, oder die zu ladende Komponente umfasst insbesondere diese. Alternativ oder in Kombination hierzu umfasst die zu ladende Komponente eine Batterie. Beispielsweise umfasst der Gleichspannungskreis zudem eine Funktionskomponente, die bei Betrieb mittels der Gleichspannungsquelle bestromt wird. Die zu ladende Komponente dient dabei beispielsweise der Stabilisierung der an der Funktionskomponente anliegenden elektrischen Spannung.

Einer der Ladeanschlüsse ist mittels einer Vorladesteuerung mit einem der Pole verbunden. Beispielsweise ist die Vorladesteuerung direkt an den Ladeanschluss und/oder den Pol angeschlossen. Besonders bevorzugt jedoch erfolgt eine elektrische Verbindung mittels jeweils einer elektrischen Leitung, die geeigneterweise abschnittsweise nach Art eines Kabels ausgebildet ist.

Die Vorladesteuerung umfasst zwei Anschlüsse umfasst, die mittels eines ersten Strompfads elektrisch verbunden sind, der eine Reihenschaltung mit einem Widerstand und einem Schalter aufweist. Einer der Anschlüsse ist dabei mit dem einen der Ladeanschlüsse und der andere Anschluss mit dem zugeordneten Pol elektrisch verbunden, beispielsweise direkt oder mittels einer jeweiligen elektrischen Leitung, zum Beispiel einem Kabel. Die Vorladesteuerung ist dabei gemäß einem Verfahren betrieben, bei dem eine Aufforderung zum Start einer Vorladung erkannt wird, und bei dem zum Start der Vorladung der Schalter in den elektrisch leitenden Zustand versetzt wird. Die Vorladung wird beendet, wenn eine an der Vorladesteuerung anfallende elektrische Spannung kleiner als ein Grenzwert ist. Hierfür wird zweckmäßigerweise der Schalter in den elektrisch nichtleitenden Zustand versetzt, sofern dies noch nicht der Fall ist.

Wenn die zu ladende Komponente somit noch nicht geladen ist, und insbesondere keinen, insbesondere zumindest ausreichenden, elektrischen Widerstand aufweist, wird mittels der Vorladesteuerung sichergestellt, dass kein übermäßiger elektrischer Strom auftritt, wenn die zu ladende Komponente geladen werden soll, weswegen eine Überlastung des Gleichspannungskreises vermieden ist.

Beispielsweise sind der andere Ladenanschluss und der andere Pol direkt miteinander elektrisch kontaktiert. Dies erfolgt beispielsweise über Masse oder mittels einer geeigneten Leitung. Besonders bevorzugt jedoch ist auch der andere Pol und der andere Ladenanschluss mittels einer weiteren Vorladesteuerung verbunden. Die weitere Vorladesteuerung ist zweckmäßigerweise baugleich zu der Vorladesteuerung. Beispielsweise sind die beiden Vorladesteuerungen zueinander separat, oder die Gehäuse der Vorladesteuerungen sind aneinander befestigt. Vorzugsweise sind die beiden Vorladesteuerungen in einem gemeinsamen Gehäuse angeordnet, was die Montage erleichtert. Somit ist geeigneterweise ein Verbund aus den beiden Vorladesteuerungen gebildet. Insbesondere betrifft die Erfindung somit auch einen derartigen Verbund. Zweckmäßigerweise ist dabei der Brückengleichrichter vorhanden, weswegen bei der Montage des Verbundes auf eine Polarität beim Anschließen der etwaigen Leitungen und/oder eine Zuordnung der Anschlüsse zu den Polen nicht geachtet werden muss. Zweckmäßigerweise wird für die elektrische Verbindung zwischen der Gleichspannungsquelle und der zu ladende Komponente ein Kabel mit einem Hinleiter und einem Rückleiter verwendet, wobei einem der Pole und einem der Ladeanschlüsse der Hinleiter und den anderen der Rückleiter zugeordnet ist. Das Kabel ist vorzugsweise an einer Stelle aufgetrennt, und dort ist der Verbund montiert. Dabei ist eine der Vorladesteuerungen in den Hinleiter und die andere in den Rückleiter eingebracht, wobei aufgrund der Brückengleichrichter die Orientierung des Verbundes beliebig gewählt werden kann.

Geeigneterweise werden die beiden Vorladesteuerungen jeweils gemäß dem Verfahren betrieben, sodass bei dem Verfahren zum Betrieb des Verbunds die beiden bei beiden Vorladesteuerungen jeweils gemäß dem Verfahren betrieben werden. Zweckmäßigerweise wird dabei jeweils für die Vorladung der jeweilige Schalter für die erste Zeitspanne in den elektrisch leitenden Zustand und dann für die vorgegebene zweite Zeitspanne in den elektrisch nichtleitenden Zustand versetzt. Insbesondere sind dabei für die beiden Vorladesteuerungen die Zeitspannen jeweils gleich. Bei dem Verfahren zum Betrieb des Verbunds wird somit die Aufforderung zum Start der Vorladung von beiden Vorladesteuerung anerkannt, wobei hierbei insbesondere bei einer der Vorladesteuerung der Schalter in den elektrisch leitenden Zustand für die erste Zeitspanne versetzt wird. Erst frühestens nach Ablauf der ersten Zeitspanne, beispielsweise nach Ablauf der zweiten Zeitspanne nach Erkennen der Aufforderung, wird geeigneterweise der Schalter der anderen Vorladesteuerung in den elektrisch leitenden Zustand versetzt. Aufgrund der Verwendung des Grenzwerts ist nach Übermittlung der Aufforderung zu den beiden Vorladesteuerung zwischen diesen kein Signalaustausch mehr erforderlich. Aufgrund des Vergleichs mit dem Grenzwert erfolgt die Vorladung dann nämlich selbstständig, bis der Grenzwert erreicht ist, also die zu ladende Komponente ausreichend geladen ist. Aufgrund der Zeitspannen ist dabei sichergestellt, dass niemals beide Schalter elektrisch leitend sind, weswegen die maximal von der Spannungsquelle bereitgestellte elektrische Energie reduziert ist.

Beispielsweise wird die Aufforderung zu einer der Vorladesteuerungen zeitlich versetzt übertragen, sodass der Schalter erst nach Abschluss Ablauf der ersten Zeitspanne in den elektrisch leitfähigen Zustand versetzt wird. Alternativ hierzu weist eine der Vorladesteuerungen ein entsprechendes Zeitglied auf.

Vorzugsweise ist jeder Schalter mittels einer jeweiligen Kapazität überbrückt. Mittels dieser wird sichergestellt, dass, wenn der Schalter sich in dem elektrisch nichtleitenden Zustand befindet, und der andere Schalter in den elektrisch leitenden Zustand versetzt ist, an jedem Ladenanschluss eine definierte elektrische Spannung anliegt, weswegen die zu ladende Komponente vergleichsweise effizient geladen wird.

Die Erfindung betrifft ferner ein derartiges Verfahren zum Betrieb des Gleichspannungskreises, wobei die beiden Vorladesteuerungen jeweils gemäß dem Verfahren betrieben werden, wobei zu einer der Vorladesteuerung die Aufforderung erst nach Ablauf einer Zeitspanne, die größer als die erste Zeitspanne ist, übertragen wird, oder bei dem bei einer der Vorladesteuerung erst nach Ablauf zumindest der ersten Zeitspanne nach Erkennen der Aufforderung der Schalter in den elektrisch leitenden Zustand versetzt wird. Das Verfahren ist somit derart ausgebildet, dass die Schalter der Vorladesteuerung nicht gleichzeitig elektrisch leitend sind, zumindest solange die Vorladung andauert.

Die im Zusammenhang mit der Vorladesteuerung erläuterten Weiterbildungen und Vorteile sind sinngemäß auch auf das Verfahren zum Betrieb einer Vorladesteuerung / den Gleichspannungskreis / den Verbund / das Verfahren zum Betrieb des Gleichspannungskreises sowie untereinander zu übertragen und umgekehrt.

Nachfolgend werden Ausführungsbeispiele der Erfindung anhand einer Zeichnung näher erläutert. Darin zeigen:
- Fig. 1: schematisch einen Gleichspannungskreis mit einer zu ladenden Komponente und einer Vorladesteuerung,
- Fig. 2: einen vereinfachten Schaltplan der Vorladesteuerung,
- Fig. 3: ein Verfahren zum Betrieb der Vorladesteuerung, und
- Fig. 4: schematisch eine Weiterbildung des Gleichspannungskreises, der zusätzlich eine weitere Vorladesteuerung umfasst.

Einander entsprechende Teile sind in allen Figuren mit den gleichen Bezugszeichen versehen.

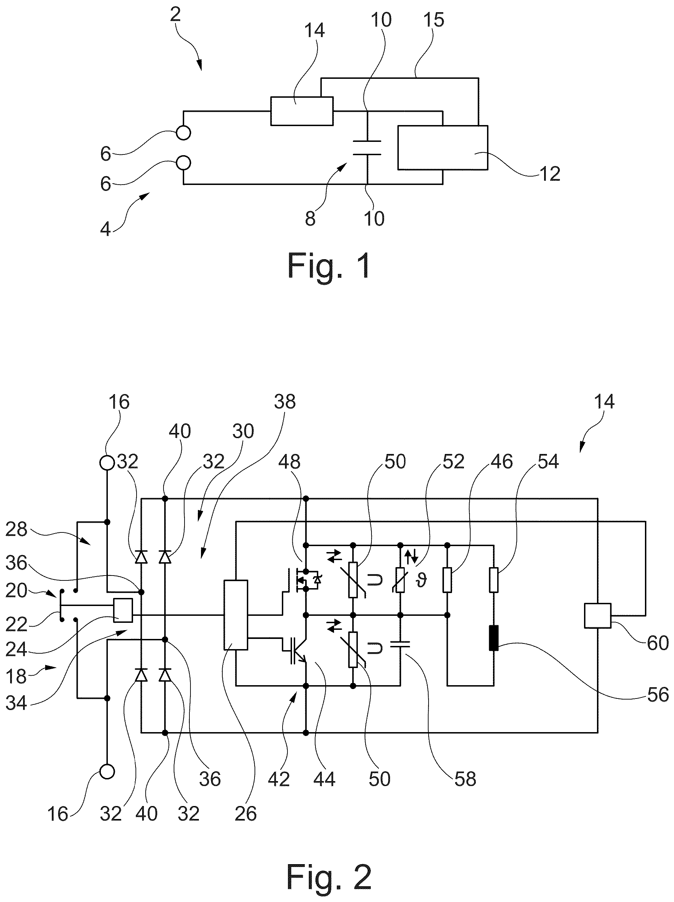

In Figur 1 ist schematisch vereinfacht ein Gleichspannungskreis 2 dargestellt, der eine Gleichspannungsquelle 4 mit zwei Polen 6 umfasst. Mittels der Gleichspannungsquelle 4 wird eine elektrische Gleichspannung von 650 V bereitgestellt, die an den beiden Polen 6 anliegt. Der Gleichspannungskreis 2 umfasst ferner eine zu ladende Komponente 8 in Form eines Kondensators, der zwei Ladenanschlüsse 10 umfasst, von denen jeweils einer einer der Elektroden des Kondensators zugeordnet ist. Elektrisch parallel zu der zu ladende Komponente 8 ist eine Funktionskomponente 12 geschaltet, sodass die zu Bestromung der Funktionskomponente 12 genutzte elektrische Spannung mittels der zu ladenden Komponente 8, also mittels des Kondensators stabilisiert wird.

Einer der Ladeanschlüsse 10 der der zu ladende Komponente 8 ist elektrisch direkt mit einem der Pole 6 der Gleichspannungsquelle 4 elektrisch kontaktiert. Der andere der Ladeanschlüsse 10 ist über eine Vorladesteuerung 14 mit dem anderen Pol elektrisch kontaktiert. Somit ist die Vorladesteuerung 14 elektrisch in Reihe mit der zu ladende Komponente 8 zwischen die beiden Pole 6 geschaltet. Auch ist die Vorladesteuerung 14 elektrisch in Reihe mit der Funktionskomponente 12 zwischen die beiden Pole 6 geschaltet. Zusammenfassend ist als ein Stromkreis gebildet. Die Vorladesteuerung 14 ist mittels einer Signalleitung 15 signaltechnisch mit der Funktionskomponente 14 verbunden.

In Figur 2 ist ein Schaltplan der Vorladesteuerung 14 dargestellt, die zwei Anschlüsse 16 umfasst. Die Anschlüsse 16 sind in ein nicht näher gezeigtes Gehäuse eingebrecht, und einer der Anschlüsse 16 ist an eine zu dem zugeordneten Pol 6 führende Leitung und der andere an eine zu dem zugeordneten Ladeanschluss 10 führende Leitung des Gleichspannungskreises 2 angeschlossen.

Die beiden Anschlüsse 16 sind mittels eines zweiten Strompfads 18 elektrisch miteinander verbunden. Der zweite Strompfad 18 weist einen mechanischen Schalter 20 auf, der als ein Doppelunterbrecher ausgebildet ist. Hierfür weist der mechanische Schalter 20 eine senkrecht zu deren Ausdehnungsrichtung beweglich gelagerte Kontaktbrücke 22 auf, deren Enden jeweils in Bewegkontakt zugeordnet ist. Mittels Verstellens der Kontaktbrücke 22, ist es möglich, jeden Bewegkontakte an jeweils einen zugeordneten Festkontakt anzulegen oder zu beabstanden. Wenn die Bewegkontakte an den Festkontakten anliegen, ist der mechanische Schalter 20 geschlossen und somit elektrisch leitfähig. In diesem Fall sind die beiden Anschlüsse 16 niederohmig elektrisch miteinander verbunden. Bei einer Beabstandung hingegen ist der mechanische Schalter 20 geöffnet, und ein elektrischer Stromfluss über diesen ist nicht ermöglicht.

Der mechanische Schalter 20 ist mittels eines Antriebs 24 angetrieben, sodass eine Art Relais gebildet ist. Der Antrieb 24 ist als ein Moving Magnet Aktuator ausbildet. Die Bestromung des Antriebs 24 erfolgt mittels einer Steuereinheit 26 der Vorladesteuerung 14. Somit wird der mechanische Schalter 20 über den zugeordneten Antrieb 24 mittels der Steuereinheit 26 betätigt, die an die nicht näher gezeigte Signalleitung 15 angeschlossen ist.

Die Vorladesteuerung 14 umfasst ferner einen ersten Strompfad 28, der parallel zu dem zweiten Strompfad 18 geschaltet ist. Somit sind die beiden Anschlüsse 16 auch mittels des ersten Strompfads 28 elektrisch miteinander verbunden. Der zweite Strompfad 28 weist einen passiven Brückengleichrichter 30 auf, der somit mittels vier Dioden 32 gebildet ist. Der Brückengleichrichter 30 weist eine Wechselspannungsseite 34 auf, die mittels zweier Wechselspannungsseitenanschlüssen 36 gebildet ist. Diese sind jeweils gegen einen der Anschlüsse 16 geführt. Somit ist die Wechselspannungsseite 34 mit den Anschlüssen 16 verbunden. Auch umfasst der Brückengleichrichter 30 eine Gleichspannungsseite 38, die mittels zweier Gleichspannungsseitenanschlüsse 40 gebildet ist. Jeder Wechselspannungsseitenanschluss 36 ist über jeweils eine der Dioden 32 mit beiden Gleichspannungsseitenanschlüssen 40 elektrisch kontaktiert, wobei die Sperrrichtung der jeweiligen beiden Dioden 32 unterschiedlich ist.

Die beiden Gleichspannungsseitenanschlüsse 40 sind mit einer Reihenschaltung 42 elektrisch verbunden, sodass die Gleichspannungsseite 38 mittels der Reihenschaltung 42 elektrisch verbunden ist. Die Reihenschaltung 42 weist einen Schalter 44 in Form eines Halbleiterschalters, nämlich eines IGBTs, auf. Der Schalter 44 ist elektrisch in Reihe mit einem Widerstand 46 geschaltet. Die Reihenschaltung 42 dabei mittels des Schalters 44 und des Widerstands 46 gebildet. Der Widerstand 46 ist ein ohmscher Widerstand und weist ein vergleichsweise großen Widerstandswert auf, beispielsweise 1 kOhm.

Der Widerstand 46 ist mittels eines weiteren Schalters 48 überbrückt, der somit elektrisch in Reihe mit dem Schalter 44 geschaltet ist. Der weitere Schalter 48 ist als MOSFET ausgebildet, und Sperrrichtung der beiden Schalter 44, 48 ist gleich, sodass eine Art Kaskode gebildet ist. Die beiden Schalter 44, 48 sind mittels der Steuereinheit 26 betätigt, mittels derer eine geeignete Steuerspannung an diese angelegt wird, sodass die Schalter 44, 48 elektrisch leitfähig oder elektrisch nicht leitfähig sind.

Die beiden Schalter 44, 48 sind mittels jeweils eines Varistors 50 elektrisch überbrückt, weswegen die Varistoren 50 elektrisch in Reihe zwischen die beiden Gleichspannungsseitenanschlüsse 40 geschaltet sind. Die Varistoren 50 sind zueinander baugleich, und mittels dieser ist ein Spannungsteiler bereitgestellt. Infolgedessen ist die über die Schalter 44, 48 abfallende elektrische Spannung begrenzt, was eine Zerstörung vermiedet. In einer nicht näher dargestellten Variante wird anstatt des Varistors 50, der parallel zum Schalter 44 geschaltet ist, ein weiterer Widerstand verwendet.

Zudem ist zu dem Widerstand 46 ein temperaturabhängiger Widerstand 52 sowie eine weitere Reihenschaltung aus einem zweiter Widerstand 54 und einer Induktivität 56 geschaltet. In einer nicht näher dargestellten Variante ist von diesen zumindest einer oder beide weggelassen, beispielsweise der temperaturabhängige Widerstand 52 und/oder die weitere Reihenschaltung.

Der Schalter 44 ist mittels einer Kapazität 58, nämlich eines Kondensators überbrückt, der diesem somit elektrisch parallelgeschaltet ist.

Ferner ist ein Sensor 60 vorhanden, der mittels der Steuereinheit 26 ausgelesen wird, und mittels dessen die über die Reihenschaltung 42 anfallende elektrische Spannung gemessen werden kann, die im Wesentlichen der über die vollständige Vorladesteuerung 14 anfallenden elektrischen Spannung entspricht.

Die Vorladesteuerung 14 ist gemäß einem Verfahren 62 betrieben, das zumindest teilweise mittels der Steuereinheit 26 durchgeführt wird. Bei dem Verfahren 62 wird in einem ersten Arbeitsschritt 64 eine Aufforderung 66 zum Start einer Vorladung 68 erkannt. Die Aufforderung 66 wird dabei von der Funktionskomponente 12 mittels der Signalleitungen 15 zur Vorladesteuerung 14 übermittelt, nämlich wenn die Funktionskomponente 12 verwendet werden soll, jedoch an dieser keine ausreichende elektrische Spannung anliegt. In diesem Fall ist die zu ladende Komponente 8 nicht geladen, und die Vorladesteuerung 14 ist elektrisch nicht leitfähig. Folglich ist der mechanische Schalter 20 geöffnet, und die beiden Schalter 44, 48 sind elektrisch nicht leitfähig.

In einem sich anschließenden zweiten Arbeitsschritt 70 wird die Vorladung 68 begonnen. Hierfür wird der Schalter 44 für eine erste Zeitspanne 72 in den elektrisch leitenden Zustand versetzt. Die erste Zeitspanne beträgt hierbei beispielsweise 0,1 Sekunde. Aufgrund des nunmehr elektrisch leitfähigen Schalters 44 ist ein elektrischer Stromfluss zwischen den beiden Anschlüssen 16 ermöglicht, wobei dies unabhängig von der Einbausituation der Vorladesteuerung 14 stets in der gleichen Richtung über die Reihenschaltung 42 erfolgt. Dabei erfolgte das Führen des elektrischen Stroms zunächst über den Widerstand 46 und dann über den Schalter 44, weswegen dessen Ansteuerung aufgrund der vorgegebenen elektrischen Potentiale vereinfacht ist. Auch wird über gegebenenfalls über den temperaturabhängigen Widerstand 52 sowie die weitere Reihenschaltung der elektrische Strom geführt, wobei mittels dieser der geführte elektrische Strom vergleichsweise genau eingestellt werden kann. Auch wird ein Anstieg des elektrischen Stroms begrenzt. Zusammenfassend wird somit für die Vorladung 68 der Schalter 44 für die vorgegebene erste Zeitspanne 72 in den elektrisch leitenden Zustand versetzt, was dem Start der Vorladung 68 entspricht.

Nach Ablauf der ersten Zeitspanne 72 wird ein dritter Arbeitsschritt 74 durchgeführt, in dem der Schalter 44 in den elektrisch nichtleitenden Zustand versetzt und dort für eine zweite Zeitspanne 76 belassen wird. Die zweite Zeitspanne 76 ist dabei länger als die erste Zeitspanne 72 und beträgt 0,5 s. Infolgedessen bricht der elektrische Stromfluss über die Vorladesteuerung 14 erneut zusammen, wobei dies aufgrund der Induktivität 56 nicht schlagartig erfolgt, weswegen eine Belastung verringert ist. Zudem ist aufgrund der Kapazität 58 sichergestellt, dass danach an dem der Vorladesteuerung 14 zugeordneten Ladeanschluss 10 auch weiterhin ein definiertes elektrisches Potential anliegt.

Nach Ablauf der zweiten Zeitspanne 76 wird überprüft, ob die über der Vorladesteuerung 14 anfallende elektrische Spannung, die mittels des Sensors 16 gemessen wird, kleiner als ein Grenzwert 78 ist, der beispielsweise 10 V beträgt. Wenn dies der Fall ist, wird ein vierter Arbeitsschritt 80 durchgeführt, und die Vorladung 68 wird beendet. Zusammenfassend wird die Vorladung 68 beendet, wenn die an der Vorladesteuerung 14 anfallende elektrische Spannung kleiner als der Grenzwert 78 ist. Somit ist zum Bestimmen, wann die Vorladung 68 beendet werden soll, keine Kommunikation mit weiteren Bestandteilen des Gleichspannungskreises 2 erforderlich, und es ist nicht erforderlich, die über die zu ladende Komponente 8 anfallende elektrische Spannung direkt zu messen.

Nach dem Ende der Vorladung 68 wird der weitere Schalter 48 zunächst ebenfalls in den elektrisch leitfähigen Zustand versetzt, sodass der mittels der Vorladesteuerung 14 bereitgestellte Widerstandswert absinkt und somit die zu ladende Komponente 8 abschließend geladen werden kann. Im Anschluss hieran wird der mechanische Schalter 20 geschlossen, wobei sich kein Lichtbogen ausbildet, da dies im Wesentlichen spannungsfrei erfolgt. Im Anschluss hieran werden der Schalter 44 und der weitere Schalter 48 in den elektrisch nichtleitenden Zustand versetzt, sodass nunmehr lediglich mittels des zweiten Strompfads 18 zwischen den beiden Anschlüssen 16 der elektrische Strom geführt wird. Aufgrund des mechanischen Schalters 20 treten dabei vergleichsweise geringe Verluste auf, weswegen eine Effizienz erhöht ist.

Zum Versetzen der Vorladesteuerung 14 erneut den elektrisch nichtleitenden Zustand werden z8nächst erneut die beiden Schalter 44, 48 in den elektrisch leitenden Zustand versetzt, und anschließend der mechanische Schalter 20 geöffnet, was aufgrund der auch weiterhin bestehenden niederohmigen elektrische Verbindung zwischen den beiden Anschlüssen 16 lichtbogenfrei erfolgt. Erst im Anschluss hieran werden die beiden Schalter 44, 48 erneut in den elektrisch nichtleitenden Zustand versetzt, sodass der elektrische Stromfluss über die beiden Anschlüsse 16 zusammenbricht. Aufgrund der beiden Schalter 44, 48 ist dabei die jeweils zu schaltende elektrische Spannung reduziert, weswegen Herstellungskosten reduziert.

Falls jedoch nach Ablauf der zweiten Zeitspanne 76 die anfallende elektrische Spannung noch größer als der Grenzwert 78 ist, wird ein fünfter Arbeitsschritt 82 durchgeführt. In diesem wird überprüft, ob seit Beginn der Vorladung 68 bereits eine dritte Zeitspanne 84 verstrichen ist, die beispielsweise 10 Sekunden beträgt. Wenn nach der dritten Zeitspanne 84 nach dem Start der Vorladung 68 die Vorladung 68 noch nicht beendet wurde, also noch nicht der vierte Arbeitsschritt 80 durchgeführt wurde, ist ein Fehlerfall 86 erkannt. In diesem Fall wird ein sechster Arbeitsschritt 88 durchgeführt, und die Vorladesteuerung 14 wird in den elektrisch nichtleitenden (leitfähigen) Zustand versetzt. Hierfür wird der mechanische Schalter 20 sowie die beiden Schalter 44, 48 in den elektrisch nichtleitenden Zustand versetzt. Zudem wird eine entsprechende Meldung über die Signalleitungen 15 ausgegeben. Der Fehlerfall 86 wird dabei beispielsweise ebenfalls erkannt, wenn die mittels des Sensors 60 gemessen elektrische Spannung größer als ein weiterer Grenzwert ist. Alternativ oder in Kombination hierzu wird mittels eines weiteren Sensors der über die Vorladesteuerung 14 geführte elektrische Strom gemessen und mit einem anderen weiteren Grenzwert verglichen. Der andere weitere Grenzwert wird dabei insbesondere anhand eines Kennfelds ermittelt, mittels dessen bestimmte Stromstärken und Zeitspannen zugeordnet sind. Wenn der geführte elektrische Strom für mindestens die zugeordnete Zeitspanne geführt wurde, ist ebenfalls der Fehlerfall 86 erkannt, also insbesondere ein Überstrom oder ein Kurzschlussstrom. Auch dann wird der sechste Arbeitsschritt 88 durchgeführt.

Wenn der Fehlerfall 86 nicht erkannt wurde, wird erneut der zweite Arbeitsschritt 70 durchgeführt und der Schalter 44 wieder für die erste Zeitspanne 72 in den elektrisch leitfähigen Zustand versetzt. Somit wird wiederum elektrische Energie zu der zu ladende Komponente 8 geleitet, und diese somit sukzessive geladen.

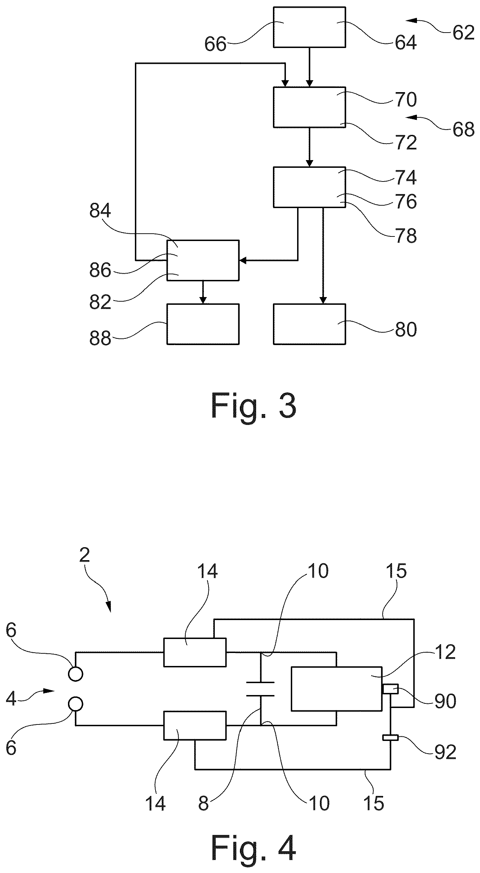

In Figur 4 ist eine Abwandlung des Gleichspannungskreises 2 dargestellt. Auch hier ist wiederum die Gleichspannungsquelle 4 mit den beiden Polen 6 vorhanden, die nicht abgeändert ist. Auch ist wiederum die Funktionskomponente 12 vorhanden, der die zu ladende Komponente 8 mit den beiden Ladeanschlüssen 10 elektrisch parallelgeschaltet ist. Hierbei ist auch weiterhin einer der Ladeanschlüsse 10 mittels der Vorladesteuerung 14 mit einem der Pole 6 elektrisch verbunden. Jedoch ist nunmehr auch der andere Ladeanschluss 10 mittels einer weiteren Vorladesteuerung 14, die baugleich zu der Vorladesteuerung 14 ist, elektrisch mit dem verbleibenden Pol 6 verbunden. Die beiden Vorladesteuerung 14 sind dabei mittels einer gemeinsamen Baueinheit bereitgestellt, wobei aufgrund der Brückengleichrichter 30 unerheblich ist, wie diese angeschlossen werden.

Die beiden Vorladesteuerungen 14 sind mittels einer jeweiligen Signalleitung 15 mit einem Schalter 90 verbunden, mittels dessen nunmehr die Aufforderung 66 bereitgestellt wird. Mit anderen Worten wird von einem Nutzer der Schalter 90 bedient, wenn nachfolgend die Funktionskomponente 12 verwendet werden soll. Im Vergleich zur vorherigen Variante erfolgt somit das Bereitstellen der Aufforderung 66 nunmehr mittels des Schalters 90 und nicht mehr mittels einer nicht näher dargestellten Steuerung der Funktionskomponente 12. Jedoch ist dies auch hier bei einer Abwandlung möglich.

Eine der Vorladesteuerungen 14 ist direkt mit dem Schalter 90 verbunden, und die andere über ein Zeitglied 92. Mittels des Zeitglieds 92 wird dabei eine Zeitverzögerung bereitgestellt, sodass die Aufforderung 66 verspätet zu der zugeordneten Vorladesteuerung 14 übermittelt wird. Das Zeitglieds 92 ist dabei derart ausgebildet, dass der Zeitversatz dem Mittelwert aus der ersten und zweiten Zeitspanne 72, 76 entspricht. Infolgedessen wird mittels dieser Vorladesteuerung 14 erst später der elektrische Strom geführt, nämlich dann, wenn bei der anderen Vorladesteuerung 14 der Schalter 44 sich bereits erneut in dem elektrisch nichtleitenden Zustand befindet. Somit erfolgt mittels der Vorladesteuerungen 14 jeweils ein abwechselndes Führen des elektrischen Stroms, sodass die aus der Gleichspannungsquelle 4 entnommene elektrische Energie stets begrenzt ist. Dabei ist mittels der Kapazität 58 sichergestellt, dass an dem zugeordneten Ladeanschluss 10 ein definiertes elektrisches Potential anliegt, wenn mittels der jeweils anderen Vorladesteuerung 14 der elektrische Strom geführt wird, weswegen ein geeignetes Laden der zu ladenden Komponente 8 erfolgt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Gleichspannungskreis
- 4: Gleichspannungsquelle
- 6: Pol
- 8: zu ladende Komponente
- 10: Ladeanschluss
- 12: Funktionskomponente
- 14: Vorladesteuerung
- 15: Signalleitung
- 16: Anschluss
- 18: zweiter Strompfad
- 20: mechanischer Schalter
- 22: Kontaktbrücke
- 24: Antrieb
- 26: Steuereinheit
- 28: erster Strompfad
- 30: Brückengleichrichter
- 32: Diode
- 34: Wechselspannungsseite
- 36: Wechselspannungsseitenanschluss
- 38: Gleichspannungsseite
- 40: Gleichspannungsseitenanschluss
- 42: Reihenschaltung
- 44: Schalter
- 46: Widerstand
- 48: weiterer Schalter
- 50: Varistor
- 52: temperaturabhängiger Widerstand
- 54: zweiter Widerstand
- 56: Induktivität
- 58: Kapazität
- 60: Sensor
- 62: Verfahren
- 64: erster Arbeitsschritt
- 66: Aufforderung
- 68: Vorladung
- 70: zweiter Arbeitsschritt
- 72: erste Zeitspanne
- 74: dritter Arbeitsschritt
- 76: zweite Zeitspanne
- 78: Grenzwert
- 80: vierter Arbeitsschritt
- 82: fünfter Arbeitsschritt
- 84: dritte Zeitspanne
- 86: Fehlerfall
- 88: sechster Arbeitsschritt
- 90: Schalter
- 92: Zeitglied

## Patentansprüche

1. Verfahren (62) zum Betrieb einer Vorladesteuerung (14), die zwei Anschlüsse (16) umfasst, die mittels eines ersten Strompfads (28) elektrisch verbunden sind, der eine Reihenschaltung (42) mit einem Widerstand (46) und einem Schalter (44) aufweist, wobei
- eine Aufforderung (66) zum Start einer Vorladung (68) erkannt wird,
- zum Start der Vorladung (68) der Schalter (44) in den elektrisch leitenden Zustand versetzt wird, und
- die Vorladung (68) beendet wird, wenn eine an der Vorladesteuerung (14) anfallende elektrische Spannung kleiner als ein Grenzwert (78) ist.

2. Verfahren (62) nach Anspruch 1,
**dadurch gekennzeichnet,**
**dass** die elektrische Spannung über der Vorladesteuerung (14) gemessen wird.

3. Verfahren (62) nach Anspruch 1 oder 2,
**dadurch gekennzeichnet,**
**dass** für die Vorladung (68) der Schalter (44) für eine vorgegebene erste Zeitspanne (72) in den elektrisch leitenden Zustand und dann für eine vorgegebene zweite Zeitspanne (76) erneut in den elektrisch nichtleitenden Zustand versetzt wird.

4. Verfahren (62) nach einem der Ansprüche 1 bis 3,
**dadurch gekennzeichnet,**
**dass** ein Fehlerfall (86) erkannt wird, wenn eine dritte Zeitspanne (84) nach dem Start der Vorladung (68) die Vorladung (68) noch nicht beendet wurde.

5. Vorladesteuerung (14) die zwei Anschlüsse (16) umfasst, die mittels eines ersten Strompfads (28) elektrisch verbunden sind, der eine Reihenschaltung (42) mit einem Widerstand (46) und einem Schalter (44) aufweist, und die gemäß einem Verfahren (62) nach einem der Ansprüche 1 bis 4 betrieben ist.

6. Vorladesteuerung (14) nach Anspruch 5,
**dadurch gekennzeichnet,**
**dass** der erste Strompfad (28) einen Brückengleichrichter (30) mit einer Wechselspannungsseite (34) und einer Gleichspannungsseite (38) aufweist, wobei die Wechselspannungsseite (34) mit den Anschlüssen (16) verbunden ist, und wobei die Gleichspannungsseite (38) mittels der Reihenschaltung (42) elektrisch verbunden ist.

7. Vorladesteuerung (14) nach Anspruch 6,
**dadurch gekennzeichnet,**
**dass** der Schalter (44) mittels eines weiteren Widerstands und der Widerstand (46) mittels eines weiteren Schalters (48) überbrückt ist.

8. Vorladesteuerung (14) nach einem der Ansprüche 5 bis 7,
**dadurch gekennzeichnet,**
**dass** der Schalter (44) mittels einer Kapazität (58) überbrückt ist.

9. Gleichspannungskreis (2) mit einer Gleichspannungsquelle (4), die zwei Pole (6) aufweist, und mit einer zu ladenden Komponente (8), die zwei Ladeanschlüsse (10) aufweist, wobei einer der Ladeanschlüsse (10) mittels einer Vorladesteuerung (14) nach einem der Ansprüche 5 bis 8 mit einem der Pole (6) verbunden ist.

10. Gleichspannungskreis (2) nach Anspruch 6,
**dadurch gekennzeichnet,**
**dass** der andere Pol (6) und der andere Ladenanschluss (10) mittels einer weiteren Vorladesteuerung (14) nach einem der Ansprüche 5 bis 8 verbunden ist.
